(19) Europäisches Patentamt / European Patent Office / Office européen des brevets

(11) EP 2 520 606 B1

(12) EUROPEAN PATENT SPECIFICATION

(45) Date of publication and mention of the grant of the patent: **29.07.2020 Bulletin 2020/31**

(21) Application number: **10841145.5**

(22) Date of filing: **08.12.2010**

(51) Int Cl.:
*C08G 73/10* (2006.01) *C08L 79/08* (2006.01)
*C08J 5/00* (2006.01)

(86) International application number: **PCT/KR2010/008741**

(87) International publication number: **WO 2011/081313 (07.07.2011 Gazette 2011/27)**

(54) **METHOD FOR MANUFACTURING A WHOLLY AROMATIC POLYIMIDE RESIN HAVING IMPROVED HEAT RESISTANCE AND ELONGATION PROPERTIES IN A HIGH TEMPERATURE RANGE**

VERFAHREN ZUR HERSTELLUNG EINES VOLLAROMATISCHEN POLYIMIDHARZES MIT VERBESSERTER WÄRMEFESTIGKEIT UND VERBESSERTEN VERLÄNGERUNGSEIGENSCHAFTEN IN EINEM HOCHTEMPERATURBEREICH

PROCÉDÉ DE FABRICATION D'UNE RÉSINE POLYIMIDE TOTALEMENT AROMATIQUE PRÉSENTANT DES PROPRIÉTÉS ACCRUES D'ALLONGEMENT ET DE RÉSISTANCE À LA CHALEUR DANS UNE PLAGE DE TEMPÉRATURES ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2009 KR 20090134767**

(43) Date of publication of application: **07.11.2012 Bulletin 2012/45**

(73) Proprietor: **Daelim Corporation**
**Seoul 100-743 (KR)**

(72) Inventors:
- **KANG, Jin Soo**
  **Daejeon 305-720 (KR)**
- **HWANG, Yong Jae**
  **Bucheon-si**
  **Gyeonggi-do 422-715 (KR)**

(74) Representative: **Charrier Rapp & Liebau**
**Patentanwälte PartG mbB**
**Fuggerstraße 20**
**86150 Augsburg (DE)**

(56) References cited:
**JP-A- 7 125 134**
**KR-A- 20080 102 545**
**KR-A- 20090 007 246**
**KR-B1- 100 228 030**
**US-A- 4 792 476**
**US-A- 5 071 997**
**US-A1- 2009 093 608**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 520 606 B1

Printed by Jouve, 75001 PARIS (FR)

## Description

## [FIELD OF THE INVENTION]

The present invention relates to a method for preparing heat-resistance polyimide resin. In particular, the present invention provides a method for preparing polyimide resin having enhanced heat-resistance and superior mechanical properties, especially high elongation at high temperature as compared to conventional polyimide resin. The polyimide resin prepared according to the method of the present invention can be used as a core heat-resistant material of semiconductor and aerospace fields where high heat-resistance is required.

## [BACKGROUND]

Generally, the term "polyimide resin" refers to high heat-resistant resin which is prepared by reacting aromatic tetra carboxylic acid or a derivative thereof with aromatic diamine or aromatic diisocyanate, followed by imidization. The polyimide resin can have various types of a molecular structure depending on the kind of a monomer used. Representative aromatic tetracarboxylic acid derivatives may include pyromelitic dianhydride (PMDA) and 3,3',4,4'-biphenyltetracarboxylic dianhydride (BPDA), and representative aromatic diamines may include oxydianiline (ODA) and para-phenylenediamine (*p*-PDA). The most representative polyimide resin has a structure represented by Formula 1 as a repeating unit.

[Formula 1]

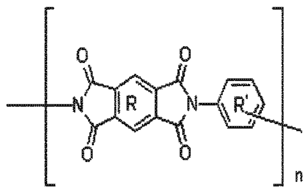

The polyimide resin including the repeating unit of Formula 1 is ultra-high heat-resistant resin which is non-soluble/non-melting, has excellent heat resistance whose operating temperature for long term is 260 °C and operating temperature for short term is 480 °C, and shows high electrochemical/mechanical properties, radiation resistance and low temperature properties, and chemical resistance. Therefore, the polyimide resin has been widely used as a core material in the various high-tech industries including electrics/electronics, automotives, semiconductor and aerospace industries.

However, in spite of its good heat-resistance and mechanical properties, its application is partially restricted to a certain temperature range, and especially, there is a problem in that cracks are generated on the surface when exposed to a high temperature for a long time. Therefore, there have been several attempts to improve heat-resistance of polyimide while maintaining its mechanical properties. For example, U.S. Patent No. 5,162,492 discloses a method for preparing polyimide by reacting 3,3',4,4'-biphenyltetracarboxylic dianhydride (BPDA) and meta-phenylenediamine (*m*-PDA) in an aprotic organic solvent such as dimethyl acetamide, N-methylpyrrolidinone and pyridine. When an imidization reaction is carried out in a liquid phase under the presence of an aprotic organic solvent according to conventional techniques, its heat-resistance can be improved, but there is a problem of lowering mechanical properties including tensile strength and elongation rate at high temperature due to extremely high crystallinity. Thus, in order to overcome such drawbacks, it has been suggested a method for preparing polyimide resin with good heat-resistance and mechanical properties by isolating polyamic acid and performing imidization in a solid phase.

The imidization method in a solid phase has several problems in that it is very difficult to regulate operation conditions for separating, transferring and drying due to high viscosity of polyamic acid, leading to the increase in unit production cost. In order to prevent the decrease in mechanical properties, especially tensile strength and elongation rate, U.S. Patent No. 5,886,129 discloses a two-step polymerization method for preparing polyimide resin having improved heat-resistance and mechanical properties by polymerizing two kinds of aromatic diamins such as meta-phenylenediamine (*m*-PDA) and para-phenylenediamine (*p*-PDA) at a specific mixed ratio in an aprotic organic solvent such as 3,3'4,4'-biphenyltetracarboxylic dianhydride (BPDA), dimethyl acetamide, N-methylpyrrolidinone and pyridine to prepare a corresponding polyamic acid, transferring the thus prepared polyamic acid to a secondary reactor, and then performing imidization.

However, such a method for preparing polyimide resin under the presence of an aprotic organic solvent suffers from the problem in that it is difficult to regulate reaction conditions due to high viscosity of polyamic acid generated during the intermediate reaction, and the selection of monomers and combination thereof is subject to restriction. Further,

water that may be included in a solvent used in the polymerization of polyimide or generated during the reaction is an obstacle to increase a molecular weight of polyimide. Since the aprotic organic solvents mentioned above are miscible with water, it is required to regulate a water content of a solvent used in the reaction to 100 ppm or lower or to use a separate method and apparatus for removing water generated during the reaction.

US2009/093608 discloses a polyimide material comprising two different monomers of pyromellithic acid imide derivatives, where one (50 to 90 mol%) is pyromellithic acid imide substituted by a divalent diphenyl ether residue and the other (10 to 50 mol%) is pyromellithic acid imide substituted by a phenylene residue. The polyimide material has a Direct Form Tensile Strength of at least 6.0 ksi and a TGA Weight Loss of not greater than about 13.0%.

US5071997 discloses polyimides having biphenylene units within the polymer chain, wherein the biphenylene residue is substituted at each benzene ring in the ortho position to the connecting bond by a radical selected from the group consisting of a halogenated alkyl group an aryl group and a substituted-aryl group.

**[SUMMARY OF THE INVENTION]**

The present inventors have therefore endeavored to overcome the problems of the prior art described above, and found a monomer composition effective to prepare polyimide resin having improved heat-resistance and optimal mechanical properties and develop a new method for preparing the same which is easier and economical than conventional techniques.

Therefore, it is an object of the present invention to provide a method for preparing polyimide resin having higher heat-resistance and mechanical properties, especially having higher elongation rate at high temperature than conventional polyimide resin, which can be effectively used as a core heat-resistant material of semiconductor and aerospace fields where high heat-resistance is required.

It is another object of the present invention to provide a method for preparing a polyimide molded article using the polyimide resin prepared according to the above method.

In accordance with an aspect thereof, the present invention provides a method as defined in claim 1. Further preferred embodiments are defined in claims 2 to 4.

According to the method of the present invention, it is possible to
prepare polyimide resin having improved heat-resistance and high tensile properties, especially high elongation rate at high temperature as compared to conventional polyimide.

The polyimide resin with high heat-resistance prepared through imidization in a liquid phase according to the present invention has a structure represented by following Formula 2.

[Formula 2]

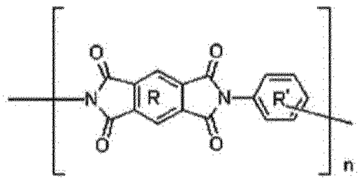

In Formula 2, R is to prepare using two kinds of tetracarboxylic dianhydrides whose mixed ratio is properly regulated, and R' is to prepare using one or more than two aromatic diamine derivatives.

Further, the present invention provides a method for preparing a polyimide molded article by compression molding the polyamide resin prepared according to the above method at a pressure of 50,000 to 100,000 psi and sintering it.

**[EFFECT OF THE INVENTION]**

According to the present invention, it is possible to prepare polyimide resin and a molded article with improved heat-resistance as compared to conventional polyimides through an easy and economic method. Further, the polyimide of the present invention overcomes the drawback of conventional polyimides whose elongation rate is decreased at high temperature of 260°C or higher, leading to the lowering of durability.

Therefore, the polyimide of the present invention exhibits superior heat-resistance, ware-resistance and mechanical properties to the conventional polyimide materials, and thus can be effectively used as a core heat-resistant material of the high-tech industry including electric/electronics, semiconductor, flat panel display, automotive and aerospace fields.

**[BRIEF DESCRIPTION OF THE DRAWINGS]**

Fig. 1 is a graph comparing heat-resistance of the polyamide according to the present invention with that of the conventional polyimide by measuring weight loss (wt%) of the polyimide depending on the time being exposed to air at high temperature.

Fig. 2 is a graph comparing an elongation rate (%) of the polyamide according to the present invention with that of the conventional polyimide, which is measured at high temperature (260 °C).

**[DETAILED DESCRIPTION OF THE INVENTION]**

Hereinafter, the present invention will be described in more detail.

In order to prepare a wholly aromatic polyimide resin with improved heat-resistance as compared to conventional polyimide resins, aromatic tetracarboxylic dianhydride and diamine have to exhibit aromaticity and not contain any functional group such as -O-, -S- or -CO- that is structurally fragile.

Further, for maintaining high mechanical properties through imidization in a liquid phase, the thus prepared polyimide must have a linear molecular structure.

Therefore, the present invention employs two kinds of aromatic tetracarboxylic dianhydride, in which the mixed ratio of 3,3',4,4'-biphenyltetracarboxylic dianhydride (BPDA) and pyromelitic dianhydride (PMDA) is regulated, and employs para-phenylenediamine (*p*-PDA) and meta-phenylenediamine (*m*-PDA) as an aromatic diamine at a specific ratio. Since the present invention employs one step direct polymerization in the presence of a phenolic polar organic solvent having a high boiling point, it is possible to prepare polyamide resin with improved heat-resistance as compared to conventional polyimides, and high tensile properties and elongation rate at high temperature.

The polyimide resin with high heat-resistance prepared by liquid phase imidization according to the present invention has a structure represented by the following Formula 3.

[Formula 3]

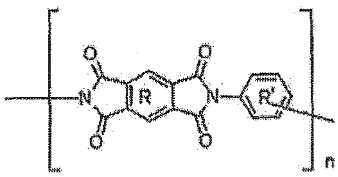

In Formula 3, R is to prepare using two kinds of tetracarboxylic dianhydrides whose mixed ratio is properly regulated. The mixed ratio is 65~75 mole% of 3,3',4,4'-biphenyltetracarboxylic dianhydride (BPDA) and 25~35 mole% of pyromelitic dianhydride (PMDA).

R' is to prepare using one or more than two aromatic diamine derivatives, namely R' is prepared using 15~60 mole% of para-phenylenediamine (*p*-PDA) and 40~85 mole% of meta-phonylenediamine (*m*-PDA), and more preferably 50~60 mole% of para-phenylenediamine (*p*-PDA) and 40~50 mole% of meta-phenylenediamine (*m*-PDA).

The polyimide resin described above can be prepared according to the following method.

Para-phenylenediamine (*p*-PDA) and meta-phenylenediamine (*m*-PDA) as aromatic diamines are dissolved in a phenolic polar organic solvent having a high boiling point at a desired mole%. Here, it is preferable that after 3,3',4,4'-biphenyltetracarboxylic dianhydride (BPDA) and pyromelitic dianhydride (PMDA) are uniformly mixed at a desired mole%, the resulting mixture was divided into three equal parts, and then, each of solid parts is added to the solvent solution while heating to a temperature of 80~120°C for 1~2 hours.

After that, the resulting reaction solution is stirred at a temperature of 80~120°C for 2 hours and heated to a temperature of 160~200°C over 1~2 hours, followed by keeping it to that temperature for 2 hours. Since the phenolic polar organic solvent used in the above reaction is immiscible with water, water generated during the reaction is evaporated, condensed in a condenser and subjected to layer separation. Therefore, water can be easily removed, and thus it is possible to obtain polyimide resin with a high molecular weight. After the thus generated polyimide slurry solution is cooled down to a temperature of 60~80 °C, 30~60 volume% of methylalcohol based on 100 volume% of the phenolic polar organic solvent used is added thereto to dilute it. The diluted polyimide slurry is washed with an organic solution with a low boiling point such as acetone or methylalcohol and dried at a temperature of 100~250 °C and $10^{-1}$Torr or

lower of vacuum and under nitrogen atmosphere for 18 fours. Here, it is preferable to dry at a temperature of 160~220 °C, and more preferably at a temperature of 190~200 °C.

The resulting polyimide resin generated above has a proper crystallinity of 5~20% or lower and a high specific surface area, and thereby, it can be effectively subjected to compression molding.

The phenolic polar organic solvent having a high boiling point used in the above reaction includes meta-cresol or a mixed cresol in which ortho-, meta- and para-isomers are nonuniformly mixed. Further, the concentration of a solid is preferably in the range of 6~16 wt%, and more preferably in the range of 8~12 wt%.

The thus prepared polyimide resin powder according to the present invention has an inherent viscosity of 0.7~2.5 dl/g, a crystallinity of 5~10%, a specific surface area of 50~200 $m^2$/g, and an imidization degree of 98~99%.

The polyimide resin of the present invention can be prepared into a polyimide molded article having high heat-resistance and excellent mechanical strength through compression molding at room temperature and high temperature under the pressure of 50,000~100,000 psi (345~690 Mpa), and then sintered at a temperature of 350~400 °C and under nitrogen atmosphere for 2~3 hours, or through compression molding to which high temperature and high pressure are simultaneously applied.

The polyimide molded article prepared using the polyimide resin of the present invention shows improved heat-resistance as compared to conventional polyimide. In addition, under the same condition, while the conventional polyimide exhibits a weight loss of 5.0 wt% or more, the polyimide of the present invention exhibits a weight loss of 2.0~1.5 wt% or lower, which suggests that the polyimide of the present invention show significantly improved heat-resistance.

Further, the conventional polyimide shows elongation rate properties in which an elongation rate measured at high temperature of 260 °C is lower than that measured at room temperature, which results in the generation of cracks while using it at high temperature or in the remarkable decrease in mechanical strength. Due to these properties, the use of the conventional polyimide is extremely restricted to the fields of semiconductor and aerospace fields where high heat-resistance is required. However, when tensile properties are measured at high temperature, the polyimide prepared according to the present invention shows rather higher elongation rate than the conventional polyimide whose elongation rate is decreased. Therefore, the polyimide having high heat-resistance according to the present invention can be effectively used as a core heat-resistant material of semiconductor and aerospace fields.

The present invention is further illustrated by the following examples. However, it shall be understood that these examples are only used to specifically set forth the present invention, rather than being understood that they are used to limit the present invention in any form.

**Example 1: BPDA (70 mole%) + PMDA (30 mole%) + *m*-PDA** (for reference)

A 2-L reactor equipped with a stirrer, a temperature regulator and a nitrogen injector was added with 37.85 g of meta-phenylenediamine (*m*-PDA), and the resulting mixture was dissolved in mixed cresol, and then passed through nitrogen gas at room temperature.

While increasing the temperature of the mixture up to 110°C lasting 2 hours, 72.08 g of 3,3',4,4'-biphenyltetracarboxylic dianhydride (BPDA, 70 mole%) and 22.90 g of pyromelitic dianhydride (PMDA, 30 mole%) were added thereto in a solid phase. Here, the addition was carried out three times with the equal amount each time, and the concentration of the solid was fixed to 8 wt%. After allowing the mixture to react at 110°C for 2 hours, the temperature of the reaction solution was increased up to 175°C lasting 2 hours and stirred for 2 hours to induce imidization. Upon completion of the reaction, the reaction solution was cooled down to 40 °C, and methylalcohol was added thereto at an amount of 40 volume% as compared with 100 volume% of cresol used in the reaction. The resulting mixture was further stirred for 30 minutes and dried under vacuum ($10^{-1}$ Torr) and nitrogen atmosphere for 16 hours.

Inherent viscosity of the thus prepared polyimide resin was measured at a concentration of 0.5 g/dl using concentrated sulfuric acid as a solvent at 30 °C. As a result, the polyimide resin had an inherent viscosity of 1.20 dl/g, and its imidization degree was 99%.

The polyimide resin was subjected to compression molding at a pressure of 100,000 psi, and then sintered at 400 °C for 3 hours under nitrogen atmosphere.

Tensile strength, elongation rate and heat-resistance of the thus prepared polyimide molded article were measured according to the following method for assessing performance, and the results are shown in Table 1.

**Example 2: BPDA (60 mole%) + PMDA (40 mole%), *m*-PDA** (for reference)

The polyimide resin was prepared using 37.85 g of *m*-PDA, 61.79 g of BPDA (60 mole%) and 30.54 g of PMDA (40 mole%) according to the same method as described in Example 1. The thus prepared polyimide resin had an inherent viscosity of 1.02 dl/g and an imidization degree of 99%.

Tensile strength, elongation rate and heat-resistance of the thus prepared polyimide molded article were measured according to the following method for assessing performance, and the results are shown in Table 1.

**Example 3: BPDA (50 mole%) + PMDA (50 mole%) + *m*-PDA** (for reference)

The polyimide resin was prepared using 37.85 g of *m*-PDA, 51.49 g of BPDA (50 mole%) and 38.17 g of PMDA (50 mole%) according to the same method as described in Example 1. The thus prepared polyimide resin had an inherent viscosity of 0.96 dl/g and an imidization degree of 99%.

Tensile strength, elongation rate and heat-resistance of the thus prepared polyimide molded article were measured according to the following method for assessing performance, and the results are shown in Table 1.

**Example 4: BPDA (30 mole%) + PMDA (70 mole%) + *m*-PDA** (for reference)

The polyimide resin was prepared using 37.85 g of *m*-PDA, 30.89 g of BPDA (30 mole%) and 53.44 g of PMDA (70 mole%) according to the same method as described in Example 1. The thus prepared polyimide resin had an inherent viscosity of 0.92 dl/g and an imidization degree of 99%.

Tensile strength, elongation rate and heat-resistance of the thus prepared polyimide molded article were measured according to the following method for assessing performance, and the results are shown in Table 1.

**Example 5: BPDA (70 mole%) + PMDA (30 mole%) + *m*-PDA (40 mole%) + *p*-PDA (60 mole%)**

The polyimide resin was prepared using 15.14 g of *m*-PDA (40 mole%), 22.17 g of *p*-PDA (60 mole%), 72.08 g of BPDA (70 mole%) and 22.90 g of PMDA (30 mole%) according to the same method as described in Example 1. The thus prepared polyimide resin had an inherent viscosity of 0.92 dl/g and an imidization degree of 99%.

Tensile strength, elongation rate and heat-resistance of the thus prepared polyimide molded article were measured according to the following method for assessing performance, and the results are shown in Table 1.

**Example 6: BPDA** (70 **mole%) + PMDA (30 mole%) + *m*-PDA (70 mole%) + *p*-PDA (30 mole%)**

The polyimide resin was prepared using 26.49 g of *m*-PDA (70 mole%), 11.35 g of *p*-PDA (30 mole%), 72.08 g of BPDA (70 mole%) and 22.90 g of PMDA (30 mole%) according to the same method as described in Example 1. The thus prepared polyimide resin had an inherent viscosity of 0.92 dl/g and an imidization degree of 99%.

Tensile strength, elongation rate and heat-resistance of the thus prepared polyimide molded article were measured according to the following method for assessing performance, and the results are shown in Table 1.

**Comparative Example: PMDA + 4,4-oxydianiline (ODA)**

A 2-L reactor equipped with a stirrer, a temperature regulator and a nitrogen injector was added 36.11 g of 4,4-oxydianiline (ODA) and dissolved in mixed cresol, the resulting mixture was passed through nitrogen gas at room temperature.

While increasing the temperature of the mixture up to 60~80 °C lasting 1~2 hours, 39.45 g of pyromelitic dianhydride (PMDA) was added thereto in a solid phase. Here, the addition was carried out three times with the equal amount each time, and the concentration of the solid was fixed to 12 wt%. After the mixture was reacted for 1~2 hours, the temperature of the reaction solution was gradually increased up to 165 °C and stirred for 1~2 hours to induce imidization. Upon completion of the reaction, the reaction solution was cooled down to 80 °C, filtered and washed with methylalcohol.

The thus prepared polyimide resin was dried at 190°C under vacuum, nitrogen atmosphere for 16 hours.

Inherent viscosity of the thus prepared polyimide resin was measured at a concentration of 0.5 g/dl using concentrated sulfuric acid as a solvent at 30°C. As a result, the polyimide resin had an inherent viscosity of 0.98 dl/g, and its imidization degree was 99%.

The polyimide resin was subjected to compression molding at a pressure of 100,000 psi, and then sintered at 400 °C for 3 hours under nitrogen atmosphere.

Tensile strength, elongation rate and heat-resistance of the thus prepared polyimide molded article were measured according to the following method for assessing performance, and the results are shown in Table 1.

**Performance Test 1: Measurement of tensile strength and elongation rate of polyimide molded article**

The tensile strength and elongation rate of the polyimide molded articles prepared above were measured according to ASTM D 1708 Standard Test.

**Performance Test 2: Measurement of heat-resistance of polyimide molded article**

The polyimide molded article was kept at 400 °C for 25 hours at a pressure of 0.61 Mpa, and then weight loss was measured.

$$\% \text{ Weight loss} = (\text{initial weigh} - \text{weight after exposure}) / \text{initial weight} \times 100$$

[Table 1]

| Example | Mole% ratio of diandydride | Mole% ratio of diamines | Tensile Strength (kg/cm$^2$) | | Elongation(%) | | Heat Resistance (wt%) |
|---|---|---|---|---|---|---|---|
| | | | 25 °C | 260 °C | 25 °C | 260 °C | |
| Ex.1* | 70 mole% BPDA 30 mole% PMDA | 100 mole% m-PDA | 1,600 | 762 | 11.0 | 22.0 | 1.25 |
| Ex.2* | 60 mole% BPDA 40 mole% PMDA | 100 mole% m-PDA | 1,500 | 747 | 10.3 | 19.0 | 1.46 |
| Ex.3 * | 50 mole% BPDA 50 mole% PMDA | 100 mole% m-PDA | 1,320 | 711 | 9.8 | 17.3 | 1.82 |
| Ex.4 * | 30 mole% BPDA 70 mole% PMDA | 100 mole% m-PDA | 1,110 | 680 | 8.9 | 15.3 | 2.32 |
| Ex.5 | 70 mole% BPDA 30 mo le% PMDA | 40 mole% m-PDA 60 mole% *p*-PDA | 1,627 | 736 | 19.1 | 64.3 | 1.24 |
| Ex.6 | 70 mole% BPDA 30 mole% PMDA | 70 mole% m-PDA 30 mole% *p*-PDA | 1,662 | 776 | 19.0 | 42.5 | 1.29 |
| Comp. Ex. | 100 mole% PMDA | 100 mole% ODA | 890 | 550 | 11.0 | 7.8 | 5.90 |
| * for reference | | | | | | | |

As shown in Table 1, since the polyimide molded articles of the present invention were prepared using PMDA and BPDA in a properly mixed form, and preferably along with using *m*-PDA and *p*-PDA, they showed higher heat-resistance than those prepared according to conventional methods using PMDA or ODA alone, and had superior mechanical properties including tensile strength and elongation rate, especially at high temperature (260°C).

Therefore, the polyimide molded articles prepared according to the present invention can be used as a core heat-resistant material of semiconductor and aerospace fields where high heat-resistance, tensile strength and elongation rate at high temperature are required.

## Claims

**1.** A method for preparing wholly aromatic polyimide resin, comprising:

liquid polymerizing a mixed monomer of 65~75 mole% of 3,3',4,4'-biphenyltetracarboxylic dianhydride (BPDA) and 25~35 mole% of pyromelitic dianhydride (PMDA) with aromatic diamine,
wherein the aromatic diamine contains 15~60 mole% of para-phenylenediamine (p-PDA) and 40~85 mole% of meta-phenylenediamine (m-PDA),
wherein the solution(liquid)-polymerization is one step direct polymerization in the presence of a phenolic polar organic solvent having a high boiling point,
wherein the phenolic polar organic solvent is meta-cresol or mixed cresol in which ortho-, meta- and para-isomers are uniformly or nonuniformly mixed.

2. The method according to Claim 1, wherein the mixed ratio of aromatic diamine is regulated to 50 to 60 mole% of para-phenylenediamine (p-PDA) and 40~50 mole% of meta-phenylenediamine (m-PDA).

3. A molded article using the wholly aromatic polyimide resin prepared by the method according to any one of Claims 1 to 2.

4. The molded article according to Claim 3, which is prepared by compression molding of the wholly aromatic polyamide resin at a pressure of 50,000~100,000 psi (345~690 Mpa) and sintering it at a temperature of 350~400°C for 2~3 hours.

## Patentansprüche

1. Verfahren zur Herstellung eines vollaromatischen Polyimidharzes, umfassend:

   Flüssigpolymerisation eines gemischten Monomers von 65-75 Mol-% 3,3',4.4'-Biphenyltetracarbonsäuredianhydrid (BPDA) und 25-35 Mol-% Pyromellitsäuredianhydrid (PMDA) mit aromatischem Diamin,
   wobei das aromatische Diamin 15-60 Mol-% para-Phenylendiamin (p-PDA) und 40-85 Mol-% meta-Phenylendiamin (m-PDA) enthält,
   wobei die Lösungs(flüssig)-Polymerisation eine einstufige direkte Polymerisation in Gegenwart eines phenolischen polaren organischen Lösungsmittels mit einem hohen Siedepunkt ist,
   wobei das phenolische polare organische Lösungsmittel ein meta-Cresol oder gemischtes Cresol ist, in dem ortho-, meta- und para-Isomere gleichförmig oder ungleichförmig gemischt sind.

2. Verfahren nach Anspruch 1, wobei das Mischverhältnis von aromatischem Diamin auf 50 bis 60 Mol-% para-Phenylendiamin (p-PDA) und 40-50 Mol-% meta-Phenylendiamin (m-PDA) geregelt wird.

3. Formgegenstand unter Verwendung des vollaromatischen Polyimidharzes, hergestellt durch das Verfahren nach einem der Ansprüche 1 bis 2.

4. Formgegenstand nach Anspruch 3, der durch Formpressen des vollaromatischen Polyamidharzes bei einem Druck von 50000 - 100000 psi (345-690 MPa) und Sintern bei einer Temperatur von 350-400°C für 2-3 Stunden hergestellt wird.

## Revendications

1. Procédé de préparation de résine polyimide totalement aromatique, comprenant :

   la polymérisation en phase liquide d'un monomère mélangé de 65 à 75 mole% de 3,3',4,4'-dianhydride biphényltétracarboxylique (BPDA) et de 25 à 35 mole% de dianhydride pyromélitique (PMDA) avec une diamine aromatique,
   dans lequel la diamine aromatique contient de 15 à 60 mole% de para-phénylènediamine (p-PDA) et 40 à 85 mole% de méta-phénylènediamine (m-PDA),
   dans lequel la polymérisation en solution (liquide) est une polymérisation directe en une étape en la présence d'un solvant organique polaire phénolique présentant un point d'ébullition élevé,
   dans lequel le solvant organique polaire phénolique est du méta-crésol ou un mélange de crésol dans lequel des isomères ortho, méta et para sont mélangés de manière uniforme ou non uniforme.

2. Procédé selon la revendication 1, dans lequel le rapport de mélange de diamine aromatique est défini avec de 50 à 60 mole% de para-phénylènediamine (p-PDA) et de 40 à 50 mole% de méta-phénylènediamine (m-PDA).

3. Article moulé en utilisant la résine polyimide totalement aromatique préparée par le procédé selon l'une quelconque des revendications 1 et 2.

4. Article moulé selon la revendication 3, qui est préparé par moulage par compression de la résine polyamide totalement aromatique sous une pression de 345 à 690 MPa (50 000 à 100 000 psi) et frittage à une température de 350 à 400°C pendant 2 à 3 heures.

[FIGURE 1]

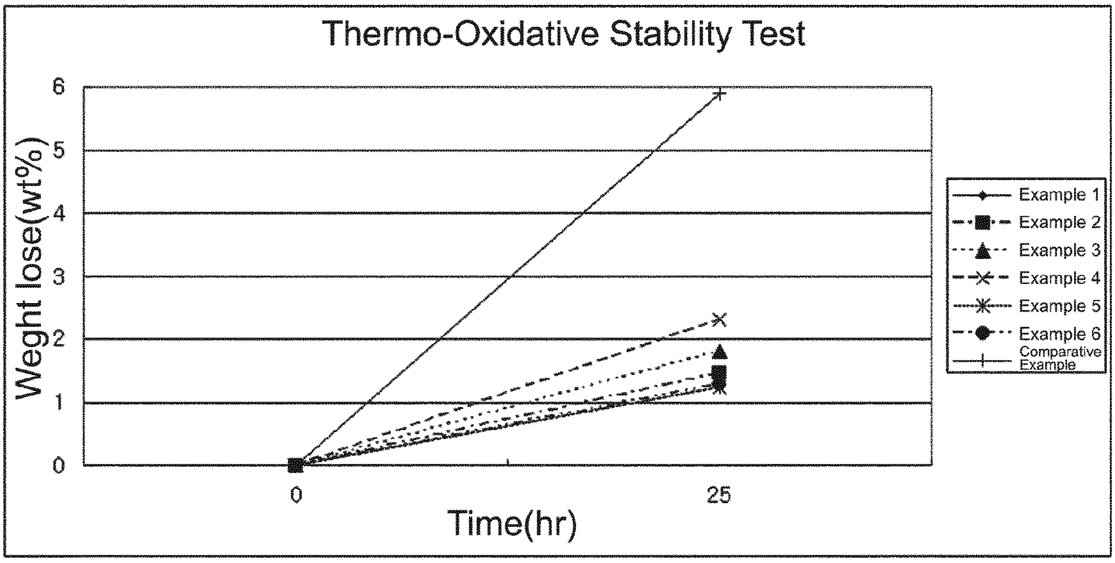


[FIGURE 2]

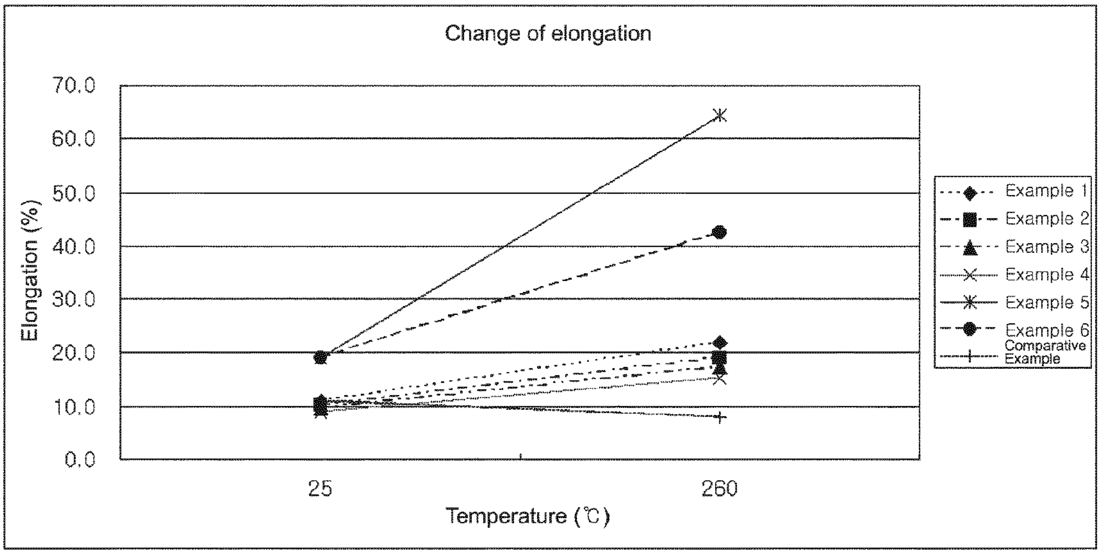

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5162492 A
- US 5886129 A
- US 2009093608 A
- US 5071997 A